(19)

Europäisches
Patentamt
European
Patent Office
Office européen
des brevets

(11) **EP 4 372 645 A1**

(12) **EUROPEAN PATENT APPLICATION**

(43) Date of publication:
**22.05.2024   Bulletin 2024/21**

(21) Application number: **22210680.9**

(22) Date of filing: **30.11.2022**

(51) International Patent Classification (IPC):
**G06Q 10/0635** (2023.01)     **G06F 17/18** (2006.01)
**G06Q 50/26** (2024.01)      **G06Q 10/04** (2023.01)

(52) Cooperative Patent Classification (CPC):
**G06Q 50/265; G06F 17/18; G06Q 10/04;
G06Q 10/0635; G06Q 50/26**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **17.11.2022   KR 20220154169**

(71) Applicant: **National Disaster Management
Research Institute
Ulsan 44538 (KR)**

(72) Inventors:
  • **SHIN, Jin Dong
    44551 Ulsan (KR)**

  • **PAK, So Yeon
    22021 Incheon (KR)**
  • **YOO, Na Kyum
    44532 Ulsan (KR)**
  • **KIM, Sung Soo
    44539 Ulsan (KR)**
  • **LEE, Dong Kyu
    44205 Ulsan (KR)**
  • **SOHN, Jee Hyun
    46016 Busan (KR)**

(74) Representative: **SJW Patentanwälte
Goethestraße 21
80336 München (DE)**

(54) **A SYSTEM AND METHOD FOR DERIVING A CUSTOMIZED PROJECT FOR IMPROVING SAFETY CAPACITY USING REGIONAL SAFETY INDEX CALCULATION**

(57)     The present invention relates to a system and method for deriving a customized project for improving safety capacity using regional safety index calculation, more particularly to a technology for accurately identifying areas of concern and improving safety capacity in each regional governing body by utilizing the calculated indicators of a regional safety index to normalize the adjusted maximum values for each indicator.

100

Indicator Selection Part — 110

Standard Configuration Part — 120

Safety Index Part — 130

Safety Rating Part — 140

FIG. 1

EP 4 372 645 A1

**Description**

CROSS-REFERENCE TO RELATED APPLICATIONS

This application claims the benefit of Korean Patent Application No. 10-2022-0154169, filed with the Korean Intellectual Property Office on November 17, 2022, the disclosure of which is incorporated herein by reference in its entirety.

BACKGROUND

1. Technical Field

The present invention relates to a system and method for deriving a customized project for improving safety capacity using regional safety index calculation, more particularly to a technology for accurately identifying areas of concern and improving safety capacity in each regional governing body by utilizing the calculated indicators of a regional safety index to normalize the adjusted maximum values for each indicator.

2. Description of the Related Art

To encourage self-governing bodies to reduce accidental deaths and otherwise take interest in safety management policies, the government has published regional safety indexes, developed by the National Disaster Management Research Institute, at the end of every year since 2015 onward.
Due to limitations in social conditions, the regional safety indexes published from 2015 to 2021 did not take into account the level of resident safety consciousness, which is an important part of disaster prevention and safety policies.
As such, in 2022, a system of regional safety indexes capable of measuring safety consciousness has been completed and announced, thus encouraging regional governing bodies to improve the safety consciousness of residents.
The current method of calculating a regional safety index incorporating safety consciousness involves a nine-step procedure, including collecting indicator statistics, standardizing indicators, adjusting indicator outliers, calculating indicator maximum values, calculating indicator scores, computing a pre-standardized safety index, performing deviation analysis for index standardization, calculating a standardized safety index, and computing a safety rating. Here, the indicator maximum values are utilized for normalization and applying weights.
With this existing method of calculating a safety index, the reference years are from 2011 to 2015, and maximum values for the various indicators are utilized as a basis for indicator normalization. Also, after the safety index is calculated by applying weights to the normalized indicators, the index is standardized to a score within the range of 40 to 100 by considering the maximum and minimum values.
However, since this method of calculating a safety index uses the years 2011 to 2015 as references, there is a need for an index calculating system and a corresponding calculation method which not only entails an adjustment to current years in consideration of societal and environmental changes but also additionally incorporates safety consciousness as an indicator type.
Moreover, whereas various changes were made to the calculated indicators from as early as 2015 to 2021 as a result of suggestions from regional governing bodies, policy changes, and the like, there have been no changes made to the classification system (harm, cause, mitigation) for the calculated indicators.
As new indicator classifications relating to resident awareness were added to the fields as safety consciousness indicators, methods of statistics collection such as surveys, etc., have become more varied, and there is a need for a technology for calculating a safety index that takes these factors into consideration.

[Prior Art Document]

(Patent Document 1) Korean Registered Patent No. 10-2124594

SUMMARY OF THE INVENTION

An aspect of the present invention, which was conceived to resolve the problem described above, aims to resolve the problems in the related art in the following ways.
First, an embodiment of the invention aims to modify the data from previous reference years (2011 to 2015) applied to the existing method for calculating a regional safety index to data suitable for the years 2015 to 2019, so as to provide information that fits the social environment.

Second, an embodiment of the invention aims to increase the reliability of the regional safety index by utilizing calculated indicators that includes consciousness indicators, which reflect resident consciousness, in addition to the existing harm indicators, cause indicators, and mitigation indicators.

Third, an embodiment of the invention aims to accurately calculate the regional safety index for each region through a series of processes for standardization, conversion to positive values, and normalization using the calculated indicator data.

Fourth, an embodiment of the invention aims to increase the accuracy of the indicator data by utilizing quartiles to adjust outliers in the indicator data.

One aspect of the invention provides a system for deriving a customized project for improving safety capacity using regional safety index calculation, where the system includes: a data collection part configured to collect statistics data for calculated indicators for one or more target regions, the calculated indicators including harm indicators, cause indicators, mitigation indicators, and consciousness indicators in a traffic accident, field, a fire field, a crime field, an everyday safety field, a suicide field, and an infectious disease field; an indicator formulation part configured to modify the collected statistics data with respect to common data including population and area information to indicator data allowing comparisons between different regions; an indicator standardization part configured to remove outliers in the indicator data and convert the indicator data for each region into a standard score by utilizing standardization reference information; an indicator positivization part configured to convert the standard score for each indicator by adding a reference value for positive conversion such that all of the standard scores become positive (+) values; an indicator normalization part configured to normalize the positively converted indicator data to scores from 0 to 1 by utilizing an adjusted maximum value for each indicator; a safety index calculation part configured to apply weights for each region to the normalized indicator data and calculate a safety index by using a preset regional safety index equation based on indicator scores having the weights applied; and a signal processing part configured to process input and output signals of the data collection part, the indicator formulation part, the indicator standardization part, the indicator positivization part, the indicator normalization part, and the safety index calculation part.

Another aspect of the invention provides a method for deriving a customized project for improving safety capacity using regional safety index calculation, where the method includes: collecting statistics data for calculated indicators including harm indicators, cause indicators, mitigation indicators, and consciousness indicators for a traffic accident field, fire field, crime field, everyday safety field, suicide field, and infectious disease field for a target region; formulating indicator data for allowing comparison between regions from the collected statistics data; standardizing the indicator data by removing outliers in the indicator data and converting the indicator data for each region into standardized scores by utilizing standardization reference information; converting all of the indicator data in a form of standardized scores to positive values by using a reference value for positive conversion; normalizing the positively converted indicator data to scores from 0 to 1 by utilizing an adjusted maximum value for each indicator; and calculating a safety index by applying weights for each region to the normalized indicator data and substituting indicator scores having the weights applied thereto to a preset regional safety index equation.

A system and method for deriving a customized project for improving safety capacity using regional safety index calculation according to an embodiment of the invention can provide more objective and more reliable regional safety index and regional safety rating information by utilizing calculated indicators that include harm indicators, cause indicators, mitigation indicators, and consciousness indicators and a series of processes for standardization, conversion into positive values, and normalization in calculating the regional safety index.

Also, an embodiment of the invention can efficiently improve the safety capacity of a regional governing body by providing a visual representation of the status and causes of vulnerable fields through information on the calculated regional safety rating.

BRIEF DESCRIPTION OF THE DRAWINGS

FIG. 1 is a system diagram illustrating the composition of a system for deriving a customized project for improving safety capacity using regional safety index calculation according to an embodiment of the invention.

FIG. 2A, FIG. 2B, FIG. 2C, FIG. 2D, and FIG. 2E collectively form a diagram illustrating the overall procedure performed by a system for deriving a customized project for improving safety capacity using regional safety index calculation according to an embodiment of the invention.

FIG. 3 is a box plot graph illustrating a method of calculating outliers by utilizing quartiles according to an embodiment of the invention.

FIG. 4 is a box plot graph illustrating indicator outliers that were calculated by utilizing quartiles.

FIG. 5 is a diagram illustrating the converting of standardized scores into positive values and the forming of a normal distribution for a process of positive value conversion according to an embodiment of the invention.

FIG. 6 is a diagram illustrating the composition of a safety index part in a system for deriving a customized project for improving safety capacity using regional safety index calculation according to an embodiment of the invention.

FIG. 7 is a diagram illustrating a process for deriving a customized project for improving safety capacity using regional safety index calculation according to an embodiment of the invention.

FIG. 8 is a diagram illustrating changes in the forms of the indicators during the calculation of a regional safety index.

DETAILED DESCRIPTION OF THE INVENTION

As the invention allows for various changes and numerous embodiments, particular embodiments will be illustrated in the drawings and described in detail in the written description. However, this is not intended to limit the present invention to particular modes of practice, and it is to be appreciated that all changes, equivalents, and substitutes that do not depart from the spirit and technical scope of the present invention are encompassed by the present invention. In the description of the present invention, certain detailed explanations of the related art are omitted if it is deemed that they may unnecessarily obscure the essence of the invention.

While such terms as "first" and "second," etc., can be used to describe various components, such components are not to be limited by the above terms. The above terms are used only to distinguish one component from another.

The terms used in the present specification are merely used to describe particular embodiments and are not intended to limit the present invention. An expression used in the singular encompasses the expression of the plural, unless it has a clearly different meaning in the context. In the present specification, it is to be understood that terms such as "including" or "having," etc., are intended to indicate the existence of the features, numbers, steps, actions, components, parts, or combinations thereof disclosed in the specification and are not intended to preclude the possibility that one or more other features, numbers, steps, actions, components, parts, or combinations thereof may exist or may be added. Certain embodiments of the present invention will be described below in more detail with reference to the accompanying drawings.

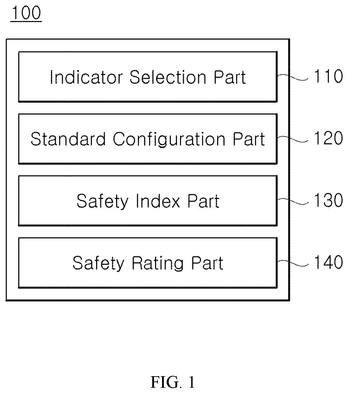

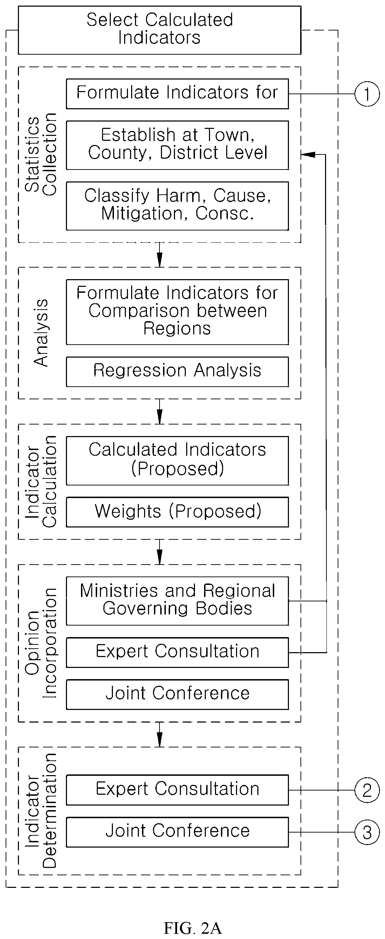

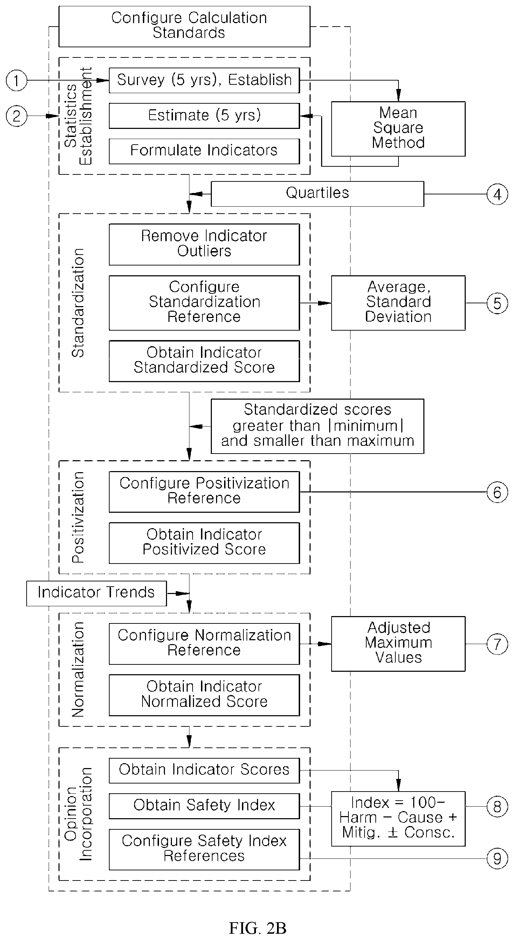

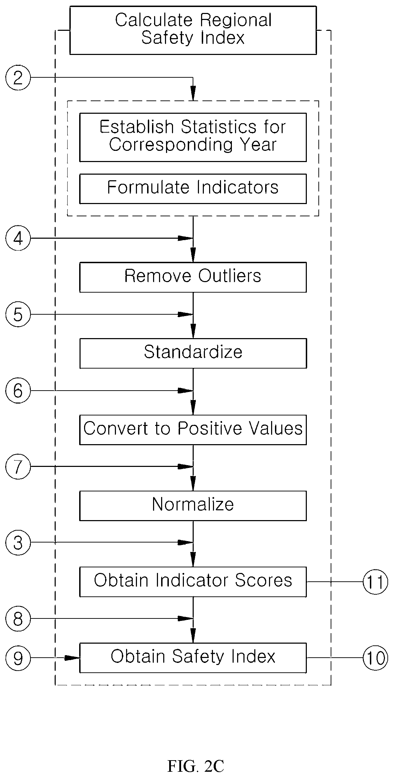

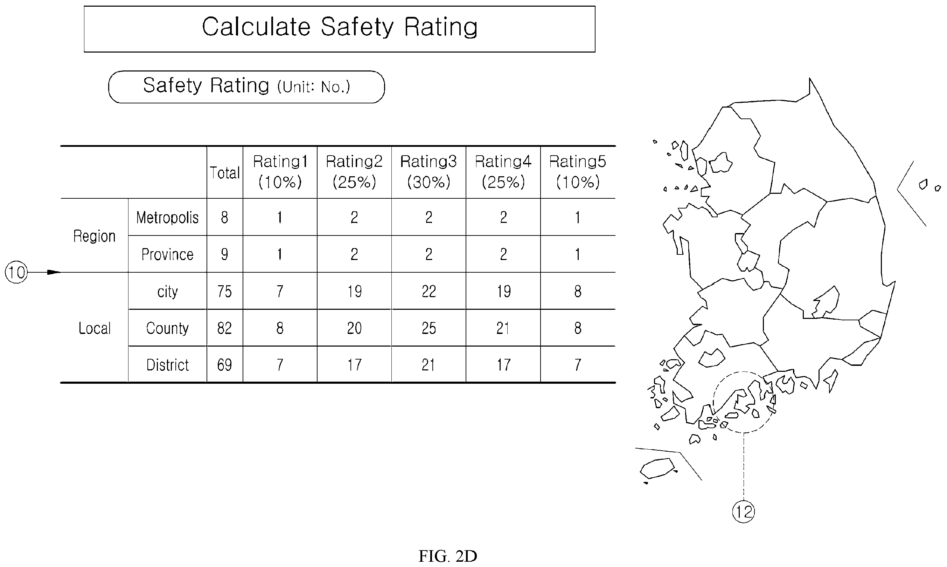

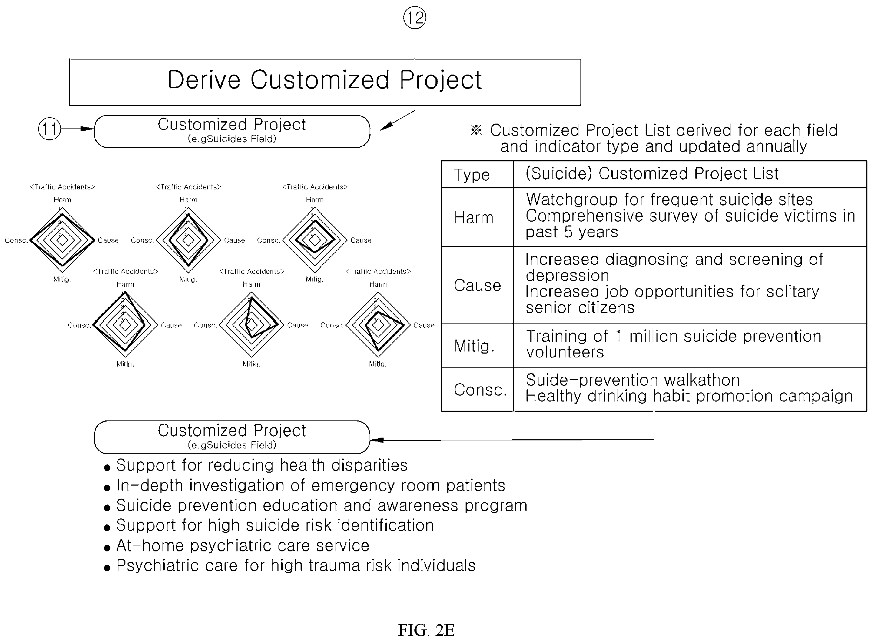

FIG. 1 is a system diagram illustrating the composition of a system for deriving a customized project for improving safety capacity using regional safety index calculation according to an embodiment of the invention, and FIGs. 2A to 2E collectively form a diagram illustrating the overall procedure performed by a system for deriving a customized project for improving safety capacity using regional safety index calculation according to an embodiment of the invention.

Referring to FIG. 1 and FIGs. 2A to 2E, a system 100 for deriving a customized project for improving safety capacity using regional safety index calculation according to an embodiment of the invention can include an indicator selection part 110, a standard configuration part 120, a safety index part 130, and a safety rating part 140.

The indicator selection part 110 can investigate and collect disaster-related information from the past five years to establish statistics data and can select indicators according to a preset standard, calculate weights, and then incorporate expert opinions to determine calculated indicator and weight information.

Here, the procedure for selecting calculated indicators can include the five processes of statistics collection, analysis, indicator formulation, opinion incorporation, and calculated indicator and weight determination, where the final calculated indicators and weights can be selected based on regression analysis and opinions from the regional governing bodies.

1) Statistics Collection

The statistics collection step can establish and utilize statistics information on harm indicators, cause indicators, mitigation indicators, and consciousness indicators in a total of six fields, including the traffic accident, fire, crime, everyday safety, suicide, and infectious disease fields.

Here, harm indicators represent the numbers of deaths and fatal accidents and are indicators should be lowered by means of various policies, projects, etc., that allow institutions (regional governing bodies, etc.) and residents to address vulnerabilities in the local community together.

Cause indicators represent measurable causes for concern that may cause or acerbate harm indicators in terms of demographic, societal, and economical factors as well as locations and facilities, etc., in a region and are indicators that institutions (regional governing bodies, etc.) and residents should manage together.

Mitigation indicators represent measurable mitigatory factors related to improvement projects for lowering harm indicators and removing hazards in each field as well as the necessary budget, required manpower, etc., and are indicators relating to measures that can be utilized or adopted by institutions (regional governing bodies, etc.).

Consciousness indicators are measurable indicators relating to resident participation, such as in the case of residents receiving and applying training provided by an institution (a regional governing body, etc.), for the purpose of lowering harm indicators and preventing, discovering, or removing hazards through resident activity in each field.

While statistics collection is generally performed every five years to allow a study of trends, etc., it is permissible in some cases to collect statistics for three or more years.

Also, the statistics classifications may consider the indicator type (harm, cause, mitigation, consciousness) and the characteristics of the corresponding fields, and classifications used in one field may be included and utilized in one or more other fields.

These can provide indexes for the different fields and not the comprehensive index for the regional safety index, so that it is only necessary to avoid redundancy in each field, and the calculated indicators can be selected and classified to fit the properties of the corresponding field as closely as possible.

2) Analysis

Indicator formulation is a process for converting the established statistical resources into indicators with which to allow comparisons between regions and can mainly involve converting the statistical resources according to various factors such as the population of registered residents, the area of the administrative district, etc., in consideration of the properties of the statistics, and utilizing regression analysis to determine the final conversion standard.

Here, harm indicators are all related to persons and, as such, can be standardized with respect to population, whereas indicator formulation standards for the remaining cause, mitigation, and consciousness indicators can be configured in various ways in consideration of the properties of the respective sets of statistics.

The calculated indicators for a regional safety index can be selected by way of regression analysis, where the analysis can be performed with harm indicators set as dependent variables and cause, mitigation, and consciousness indicators set as independent variables.

While the ranges of weights for different calculated indicator types have changed based on policies, the weights for individual indicators can be selected in consideration of the impact of the regression analysis.

3) Indicator Calculation

With safety consciousness included, the weight limits for the calculated indicator types can be determined based on the opinions of the regional governing bodies, etc., for example by setting the weight limits for the harm:cause:mitigation:consciousness types as 50:10:20:20.

The weight for an indicator can be calculated by [Equation 1] shown below.

[Equation 1]

$$\text{Weight for Indicator} = \frac{\text{Standardized Beta Coefficient of Indicator} \times \text{Weight Limit for Indicator}}{\text{Sum of Absolute Values of Standardized Beta Coefficients of Indicators of Corresponding Indicator Type}}$$

For example, a weight for the 'number of vulnerable persons' type (cause indicator) in the traffic accident field can be derived as follows.

weight = (0.509×10)/(0.509+.135) = 7.91

- weight limit for a cause indicator type: 10%,
- standardized beta coefficients: number of vulnerable persons 0.509, number of healthcare businesses 0.135

4) Opinion Incorporation

Opinion incorporation can be performed by way of setting a direction for incorporating opinions, reviewing opinion incorporation, receiving expert consultation, and holding metropolitan and provincial joint conferences. As a result of these processes, the calculated indicators for a regional safety index that includes safety consciousness can be determined.

5) Calculated Indicator and Weight Determination

The calculated indicators and weights provide a means for measurably representing the safety capacity of each region and can be determined through the above processes of statistics collection to opinion incorporation.

In this manner, the indicator selection part can finalize the calculated indicators and weights through the processes of statistics collection, analysis, indicator calculation, opinion incorporation, and calculated indicator and weight determination.

The standard configuration part 120 can configure the standard information needed for computing the safety index by using the statistical data of ten years, including the observed statistics of the most recent five years and the predicted statistics of the next five years, to configure the standards for standardization, conversion to positive values, normalization, and safety index calculation.

The standard configuration part 120 can configure standards that allow a comparison between statistics resources and a consistent measuring of changes, as needed in the procedure for calculating a regional safety index, through the five steps of statistics establishment, standardization, conversion to positive values, normalization, and safety index standard configuration.

1) Statistics Establishment

The purpose of an index is to measure a changing characteristic in a consistent manner according to a set standard. Thus, the regional safety index, as a type of index, allows a yearly measuring of changes in the safety capacity of a regional governing body according to a set standard.

A set standard refers to a frame of reference by which to consistently measure the calculated indicators and weights selected above as well as changes in the calculated indicators, where the frame of reference once set can be utilized in standardization and normalization, etc., with the units removed from the calculated indicators of several years.

If the frame of reference does not allow for future changes in the statistics and is set too short, such that the frame of reference is changed midway, then the measurements may lack consistency. On the other hand, if the frame of reference is set too large, there may be a lack of sensitivity to changes in the indicators.

A frame of reference is configured at the present point in time but serves as a reference for the observed statistics of future years. Therefore, the configuring of the frame of reference should not consider only the currently observed statistics but should also consider the changing trends of the calculated indicators.

As such, a set of statistics for ten years may be established, including the observed statistics of five years used in selecting the calculated indicators and the predicted statistics of the next five years, for each metropolitan city, province, town, county, and district.

The ranges of the observed and predicted statistics can be adjusted in consideration of the cycle in which the statistics for the calculated indicators are produced, etc. The calculated indicators, once selected, can be used for a minimum of three to five years so as to maintain constancy in the regional safety index, and hence it may be desirable to provide predicted statistics for five years.

The estimation may use the method of least squares for consistency, since regression analysis, etc., may be used in selecting the calculated indicators.

Since the regional safety index has come to measure not only safety levels but also safety consciousness, the statistical properties of the calculated indicators may greatly vary and may include the results of numerous statistics surveys, etc.

Therefore, as opposed to the existing method which addresses only the maximum values of the indicators, an embodiment of the invention may use a method of configuring the calculation standards by establishing a set of statistics for ten years for each regional governing body from the statistics resources, in a manner that considers both the statistics of the calculated indicators and the properties of the regional governing bodies.

2) Configuration of Indicator Formulation and Outlier Standards

Indicator formulation, which is the process of converting the established statistics resources into a form that allows comparisons between regions, may utilize the standards determined in the procedure for selecting calculated indicators.

Here, the standards determined in the calculated indicator selection procedure may include criteria related to population, road area, etc., such as the number of vulnerable persons per population of 10,000, the number of traffic cameras per unit road area, and the like.

In converting the statistics into indicators to provide numerical information with which to allow comparisons between regions, it may be necessary to remove outliers, which represent extreme values.

If a frame of reference is made for a particular calculated indicator without removing or adjusting outliers, it can be difficult to accurately measure changes in the indicator for the corresponding regional governing body.

If a frame of reference is configured for a subsequent standardization or normalization process from an average or maximum value that was obtained with extremely large outlier values left unremoved, then the indicator values for the normal range would be measured to be relatively lower.

The above case would pose the problem of undervaluing the efforts of regional governing bodies, etc., and the opposite case would also pose problems. Therefore, a process of generally removing or adjusting extremely large or extremely small outliers may be performed as a pretreatment process before statistical analysis.

While various methods can be used to remove outliers, an embodiment of the invention utilizes the quartile method, which entails changing an outlier to a maximum value that is not an outlier.

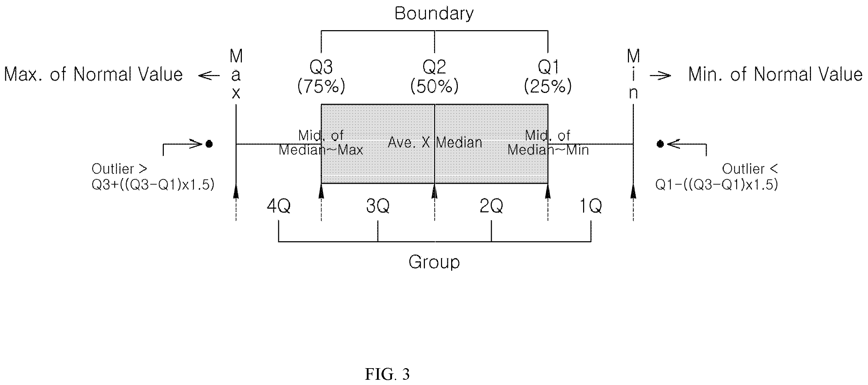

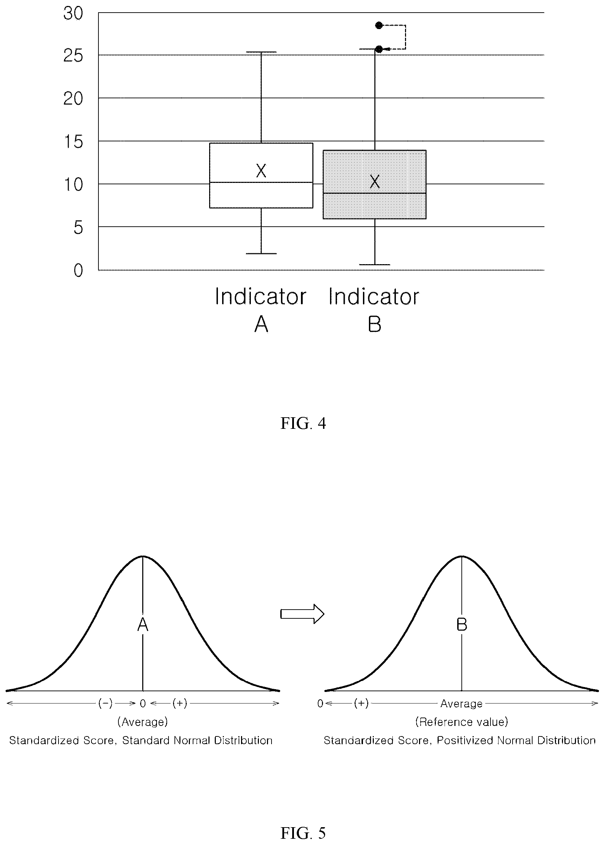

FIG. 3 is a box plot graph illustrating a method of calculating outliers by utilizing quartiles according to an embodiment of the invention, and FIG. 4 is a box plot graph illustrating indicator outliers that were calculated by utilizing quartiles.

Referring to FIG. 3, the quartile method uses a mathematical formula to designate the range of outliers, so that a maximum value within the normal range can be readily obtained without relying on the personal opinion of the researcher.

An example of quartiles calculated for indicators and expressed in a graph form is shown in FIG. 4. In the example, there are no outliers for indicator A, but there is a regional governing body having an outlier for indicator B. In this case, the outlier is converted to a maximum value lying within the normal range.

2) Standardization

(1) Outlier Removal

In the process of configuring the standards for a regional safety index, quartiles may be utilized to adjust outliers, to allow a suitable measurement of the safety capacities of regional governing bodies.

However, an embodiment of the invention may not necessarily adjust outliers in all fields and can adjust only extremely large outliers to a maximum value within the normal range, in consideration of the purpose of the regional safety index, etc.

For example, an embodiment of the invention may not adjust outliers in harm indicator fields and may adjust only extremely large outliers in the fields of cause, mitigation, and consciousness indicators for the following three reasons.

A first reason can be to provide an evidence-based disaster and safety policy.

Excluding only extremely large outliers may be because some indicators for the regional safety index, for example related to mitigation indicators, etc., are open to large amounts of input by a regional governing body within a relatively short period of time.

Also, the statistics for a particular field may form an S-shaped curve that includes a part where the effect and impact are canceled out. A part bent at the quartile may be interpreted as the maximum value for the normal range, and any value beyond this may be interpreted as an outlier and adjusted to the maximum value for the normal range. Incorporating extremely large outliers in the selection of the frame of reference, etc., can result in a lowered sensitivity to changes in the indicators.

A second reason can be to appropriate reflect efforts made by the regional governing bodies.

Reasons not to adjust an extremely low outlier can be that this corresponds to a lower portion of the S curve in the statistics, and that there are too few cases of statistical records to interpret increases and decreases in disasters and accidents.

However, if an indicator value is upwardly adjusted to the minimum value for the normal range, it may appear that there was an improvement in the numerical result of the regional safety index due to a statistical reason even though there was no effort put forth. That is, there may be a numerical illusion of effort having been exerted even though there was none.

Conversely, if the effort put forth by a regional governing body is not enough to yield a change in the indicator value that lies beyond the outlier range, this effort may not be incorporated in the result of the regional safety index and thus may discourage the regional governing body from providing further effort.

In terms of configuring a frame of reference, removing extremely large outliers while leaving extremely small outliers unremoved also makes it possible to measure indicator changes with greater sensitivity.

A third reason can be in regard to leaving outliers unremoved for harm indicators.

The regional safety index is a system aimed at reducing disasters, accidents, and deaths by encouraging regional governing bodies to be more aware of disaster prevention and safety policies and to autonomously resolve vulnerabilities.

Therefore, regional governing bodies must continuously strive to lower the values of harm indicators, which represent the numbers of disasters, accidents, and deaths, and should the regional governing bodies fail to do so, such results must be immediately reflected in the regional safety index.

From a statistical viewpoint, harm indicators are dependent variables and serve as reference values that are limited in their impact on the increase and decrease of the independent variables, i.e., the cause, mitigation, and consciousness indicators. As such, it may be desirable not to remove outliers for harm indicators.

(2) Standardization References and Indicator Standardization Scores

By utilizing the indicator values in which outliers have been adjusted, the average and standard deviation values may be obtained for a standardization process, which is to adjust the scales of the indicators such that additions and subtractions may be made between the indicators. The process can utilize resources for a ten-year period for each indicator.

A standardization process may be performed, using the indicators in which outliers have been adjusted, to adjust the scales to allow additions and subtractions between indicators.

In this process, the indicator values for the ten-year period in which outliers have been adjusted can be converted to the form of a standard normal distribution where the average is set to "0" and the standard deviation is set to "1".

One of the most important parts of this conversion process is that the changes in yearly indicators must agree with the changes in standardized scores. If an indicator has increased compared to a previous year but the standardized score shows a decrease, this would mean that the attributes of the resources have changed and that the configuring of the frame of reference was unsuitable.

A method of computing the standardized score for each indicator may involve using [Equation 2] below, where the average and standard deviation values serve as a frame of reference.

[Equation 2]

$$\text{Standardized Score for each Indicator} = \frac{\text{Indicator} - \text{Average}}{\text{Standard Deviation}}$$

3) Conversion to Positive Values

After the indicator values are standardized, the average of the indicators is set to "0", so that all indicators smaller than the average have negative (-) values. However, since all of the statistics resources are in the form of positive numbers and the regional safety index uses an additive and subtractive equation, it may be desirable to configure the reference value such that all of the indicators are provided in the form of positive values. The reference value for the positivization (conversion to positive values) can be configured to be greater than the minimum value of the indicators and smaller than the maximum value of the indicators.

FIG. 5 is a diagram illustrating the converting of standardized scores into positive values and the forming of a normal distribution for a process of positive value conversion according to an embodiment of the invention.

FIG. 5 illustrates a process of changing the normal distribution graph A to graph B. Graph A is in the form of a standard normal distribution with an average of "0" and a standard deviation of "1", with the indicator values split into "-" and "+" values on either side of the average.

Therefore, if a reference value is added such that all of the indicator values become positive numbers, the average can be moved to the "reference value", while the standard deviation can be kept at "1", forming graph B.

The reference value can be configured to be greater than the minimum value of the indicators and smaller than the maximum value of the indicators, in order that the minimum value may be made greater than 0.

Making the reference value too great can result in lowered sensitivity in measuring changes in the indicators.

Thus, the equation for providing a positive score for the indicators can be expressed in the form of an additive equation as [positivized score for each indicator = standardized score for each indicator + positivization reference value].

Here, a concept for suitably reflecting the efforts made by regional governing bodies can be additionally applied to the process of converting to positive values.

That is, in the process of conversion to positive values, a statistics value of "0" for certain indicators can be changed to a positive number due to the addition of the reference value. Of course, even in this case, the statistics value would be a minimum value, and there would be no statistical change such as a change in ranking, etc., among regional governing bodies.

However, if a regional governing body has made an effort to achieve "0" for the "number of drunk driving cases", for example, keeping a "0" score would provide greater meaning over a minimum value score, regardless of mathematical principles, and would be a more appropriate reflection of effort.

Also, the field concerning fires may use a harm indicator that considers both the number of deaths and the number of fires. If there was a fire but no deaths occurred, this would mean that the regional governing body provided a suitable reaction. To reflect such effort, the reference value for conversion to positive values can be applied by 50% only, in cases where the number of deaths is "0".

4) Normalization

The index may have the impact of each indicator adjusted by a weight. Therefore, a normalization process is needed for changing the indicator to a value from 0 to 1, so that the indicator may be added or subtracted within the range of the impact designated for its weight.

Typically, a normalization equation mainly utilizes a maximum value and a minimum value, as in [Equation 3] shown below.

[Equation 3]

$$\text{Normalized Indicator} = \frac{\text{Indicator} - \text{Indicator}_{minimum}}{\text{Indicator}_{maximum} - \text{Indicator}_{minimum}}$$

However, an embodiment of the invention may utilize an equation using only an adjusted maximum value for the regional safety index, as in [Equation 4] shown below.

[Equation 4]

$$\text{Normalized Indicator} = \frac{\text{Indicator}}{\text{Indicator}_{adjusted\ maximum}}$$

That is, using a typical normalization equation such as [Equation 3] for the regional safety index may not properly reflect the efforts of the regional governing bodies, and therefore an equation similar to as [Equation 4] may be used.

For example, suppose that a regional governing body has made an effort in the field of crime prevention and has increased the number of security cameras from two, which corresponded to the minimum value for the previous year, to a total of nine in the current year.

If the increased value still corresponds to a minimum value, then using an equation similar to [Equation 3] would still yield "0", and thus fail to suitably reflect the efforts of the regional governing body. As such, in the equation for the regional safety index, it may be desirable to use a normalization equation based on an adjusted maximum value, such as one similar to [Equation 4].

Here, an adjusted maximum refers to a value selected in consideration of increasing and decreasing trends, etc., of the indicators converted to positive values, instead of the value provided from a regional governing body corresponding to the maximum value among the ten-year resources for each indicator.

This is to select an optimal maximum value by considering various cases, such as increases, decreases, fluctuations, etc., in the indicators.

In a decreasing trend of indicators, the oldest value among the indicators of ten years would be the maximum, whereas in an increasing trend of indicators, the newest value would be the maximum.

Depending on the characteristics of an indicator, large deviations in increase and decrease trends according to year or region can result in an excessively large maximum value, in which case the normalized indicators may become excessively small, and the designated impact (weight) of the corresponding indicator can be applied relatively smaller during the process of calculating the regional safety index.

If the maximum value is configured based on a short period without consideration of the increasing or decreasing trends, etc., of the indicators, then an increasing trend in indicators can result in the indicators of multiple governing bodies exceeding 1, whereas a decreasing trend in indicators can result in the impact of indicators being applied smaller than the designated value (weight).

To minimize these various problems, an embodiment of the invention may configure an optimal, adjusted maximum value by considering the increase and decrease trends of the ten years worth of indicators.

Also, if a value is over "1" or under "0" even after statistically adjusting outliers, these may ultimately be normalized to 1 and 0 so as to remain within the impact range of the weight.

5) Safety Index

The safety index for each region may be calculated by multiplying the weights to the normalized indicators to yield a score for each indicator and then substituting these values into the equation for yielding the regional safety index.

That is, the statistics resources may be converted into indicators, which allow comparisons between regions, and the indicators may then be converted into indicator scores, which allow additions and subtractions between indicators, through a procedure of standardization, conversion to positive values, normalization, and multiplication of the respective weights.

The indicator scores may be used to calculate the safety index for each region by utilizing [Equation 5] shown below, and in cases where a visual representation of changes in the safety indexes for the six individual fields is needed, the reference values can be configured such that the maximum values for the safety indexes of the starting year are all set to 80 or another suitable value.

[Equation 5]

$$\text{Safety Index} = 100 - (\text{Harm Indicators} + \text{Cause Indicators} - \text{Mitig. Indicators} \pm \text{Consc. Indicators})$$

$$= 100 - \left\{ \sum_{i=1}^{n} (\omega_i \times H_i) + \sum_{j=1}^{m} (\alpha_j \times C_j) - \sum_{k=1}^{o} (\beta_k \times M_k) \pm \sum_{l=1}^{p} (\gamma_l \times S_l) \right\}$$

| $(\omega_i$: | Harm Indicator Weights | $\alpha_j$: | Cause Indicator Weights | $\beta_k$: | Mitig. Indicator Weights | $\gamma_l$: | Consc. Indicator Weights |
| --- | --- | --- | --- | --- | --- | --- | --- |
| $H_i$: | Harm Indicator Score | $C_j$: | Cause Indicator Soores | $M_k$: | Mitig. Indicator Scones | $S_l$: | Consc. Indicator Scores |

When the configuring of the calculation standards by the standard configuration part 120 is completed as described above, the safety index part 130 and the safety rating part 140 can calculate the safety index and rating for each region with respect to the statistics data for the corresponding year.

The processes performed by the indicator selection part 110 and the standard configuration part 120 can be performed when there are changes resulting from improvements in the calculated indicators for a regional safety index, whereas the processes performed by the safety index part 130 and the safety rating part 140 can be performed every year.

That is, in a system 100 for deriving a customized project for improving safety capacity using regional safety index calculation according to an embodiment of the invention, the indicator selection part 110 and the standard configuration part 120 can be configured by administrators beforehand.

The safety index part 130 and the safety rating part 140 can provide a service for improving safety capacity in each field by using statistics data collected every year to calculate the safety index and compute the safety rating for each region.

In particular, the safety index part 130, which serves as an essential component of the system for deriving a customized project for improving safety capacity using regional safety index calculation according to an embodiment of the invention, can calculate the safety index for each region based on the indicator selection, weights, and standard information configured by the indicator selection part 110 and standard configuration part 120.

A more detailed description is of the safety index part 130 and safety rating part 140 is provided below.

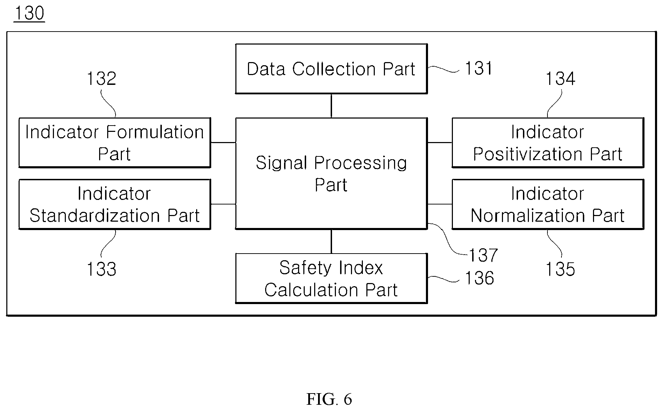

FIG. 6 is a diagram illustrating the composition of the safety index part 130 (the composition for calculating the regional safety index) in a system 100 for deriving a customized project for improving safety capacity using regional safety index calculation according to an embodiment of the invention.

As illustrated in FIG. 6, the safety index part 130 can include a data collection part 131, an indicator formulation part 132, an indicator standardization part 133, an indicator positivization part 134, an indicator normalization part 135, a safety index calculation part 136, and a signal processing part 137.

The data collection part 131 can collect statistics data for the calculated indicators, including harm indicators, cause indicators, mitigation indicators, and consciousness indicators, for the traffic accident, fire, crime, everyday safety, suicide, and infectious disease fields for a corresponding region.

The indicator formulation part 132 can modify the collected statistics data, with respect to common data including population and area information, into indicator data that allows comparisons between different regions.

The indicator standardization part 133 can remove outliers from the indicator data and convert the indicator data for each region into a standardized score by utilizing the standardization reference information.

Here, the indicator standardization part 133 can use quartiles in the adjusting of outliers in the indicator data for cause indicators, mitigation indicators, and consciousness indicators, with the harm indicators excluded.

Afterwards, the indicator data in which outliers have been adjusted can be utilized to configure the average and standard deviation needed for the standardization of each indicator.

The scales of the configured indicator averages and standard deviations can be adjusted such that the indicator average becomes '0' and the standard deviation becomes '1', and the standardized score for each indicator can be obtained by [Equation 2], described above in regard to the standardization configuration by the standard configuration part, to allow comparisons between different indicators.

The indicator positivization part 134 can add a reference value to the standard score for each indicator such that all of the standard scores become positive (+) values.

Here, the description of the reference value for the conversion to positive values is as already set forth in the detailed description of the conversion to positive values step of the standard configuration part and thus will not be repeated here.

The indicator normalization part 135 can utilize the adjusted maximum value for each indicator to normalize the indicator data to a score between 0 and 1.

Here, the indicator normalization part 135 can configure the adjusted maximum values, in consideration of the increase and decrease trends during the ten-year period of each indicator as well as the increase and decrease deviations per year and per region, and can utilize the adjusted maximum values configured for each indicator to normalize the indicators to scores between 0 and 1 through [Equation 4] in the normalization configuration by the standard configuration part.

The safety index calculation part 136 can apply the weights for each region to the normalized indicator data and can calculate the safety index for each region based on the indicator scores having weights applied, by way of [Equation 5] described above with regard to the step of calculating safety indexes by the standard configuration part.

Here, the description of calculating the safety indexes is as already set forth in the detailed description of the safety index calculation step of the standard configuration part and thus will not be repeated here.

The signal processing part 137 can be connected to each of the data collection part 131, indicator formulation part 132, indicator standardization part 133, indicator positivization part 134, indicator normalization part 135, and safety index calculation part 136 and can process the input and output signals of each component.

That is, the signal processing part 137 can be connected to the indicator selection part 110, standard configuration part 120, and safety rating part 140 and can perform the functions of transmitting and receiving various information to allow each of the components of the safety index part 130 to perform their respective functions.

When the safety index for each region is calculated by the safety index part 130 as above, the safety rating part 140 can compute the safety rating for each region by applying one of five ratings to each of the target regions according to the safety index for the respective region calculated by the safety index part.

That is, the safety rating part 140 can publish a regional safety index safety rating to provide visually recognizable information, so that the regional governing bodies may autonomously identify vulnerabilities in each field.

Thus, an embodiment of the invention can provide a service for efficiently developing disaster prevention and safety projects by diagnosing the safety status in each field and providing consultation information.

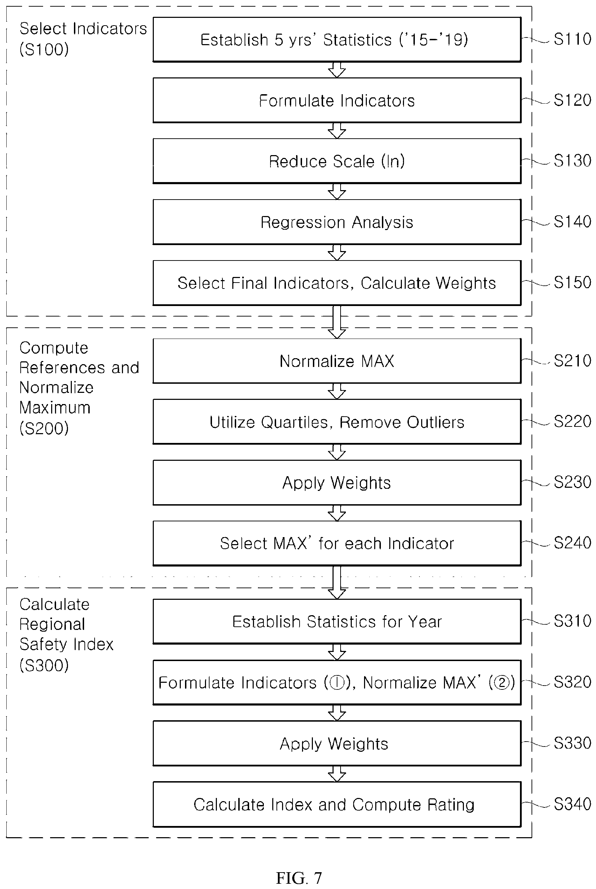

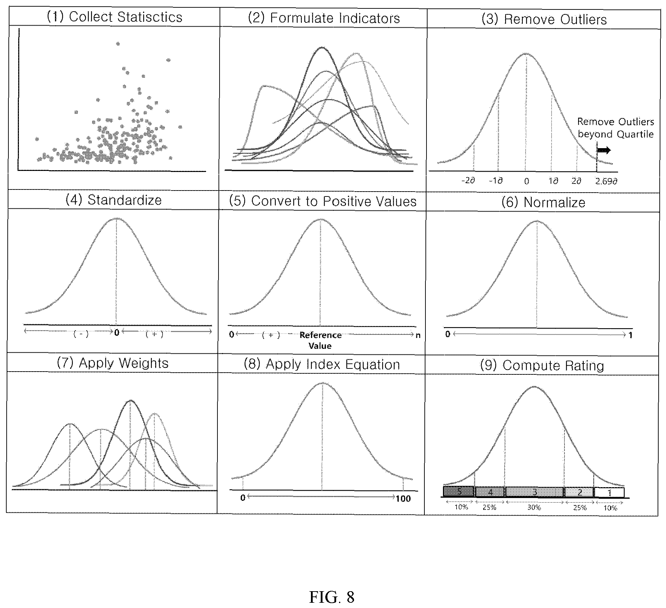

FIG. 7 is a diagram illustrating a process for deriving a customized project for improving safety capacity using regional safety index calculation according to an embodiment of the invention, and FIG. 8 is a diagram illustrating changes in the forms of the indicators during the calculation of a regional safety index.

First, as illustrated in FIG. 7, a process for deriving a customized project for improving safety capacity using regional safety index calculation according to an embodiment of the invention can largely include a step of selecting indicators (S100), a step of computing references and normalizing adjusted maximums (S200), and a step of calculating the regional safety index (S300).

The step of selecting indicators (S100) may entail establishing the statistics data for calculating the regional safety index and may include establishing statistics data (S110) corresponding to harm indicators, cause indicators, mitigation indicators, and consciousness indicators in regard to disaster- and accident-related data in the fields of traffic accidents, fires, crime, everyday safety, suicides, and infectious diseases.

Afterwards, with various standards incorporated, the data may be converted to formulate indicators (S120) to allow comparisons between regions, and in order to resolve errors that may possibly arise from differences in scale during regression analysis, the scale of the indicator data may be reduced (S130) by a natural logarithm (ln).

Afterwards, the final indicators may be selected through a regression analysis process (S140) to adhere to societally accepted and statistically valid concepts of causality, and weights may be computed (S150). Here, the reference values for standardized beta coefficients, statistical significance, multicollinearity, and coefficients of determination ($R^2$: explaining ability) can be configured beforehand as references for determination in the regression analysis.

The step of computing references and normalizing maximums (S200) may include normalizing the maximum values (S210) by using the reference maximum values (MAX) for the five-year data of the corresponding indicators, removing outliers by utilizing quartiles (S220), and applying the weights (S230) calculated in the step of selecting indicators described above to calculate the adjusted maximum value (MAX') for each indicator (S240).

The step of calculating the regional safety index (S300) can include a step of establishing the statistics data for the corresponding year (S310), obtaining data (S320) from the step of selecting indicators (S100) and the step of computing references and normalizing adjusted maximums (S200), applying weights (S330) based on the obtained data by using [Equation 5] to calculate the regional safety index, and computing the rating (S340) from the calculated regional safety index for each of the grouped regions according to preset proportions of ratings.

FIG. 8 is a diagram illustrating changes in the forms of the indicators following the specific operations of the step of calculating a regional safety index.

The process of calculating a regional safety index is described below with reference to drawings (1) to (9) of FIG. 8.

(1) The statistics of the calculated indicators determined in the calculated indicator selection are established (collected) for a corresponding year (e.g., the statistics for the year 2021 are collected to compile a regional safety index for the year 2022).

(2) The established statistics resources are converted to indicators that allow comparison between regions.

(3) Quartiles are utilized to remove outliers in the formulated indicators.

(4) The indicators for each region are converted to a standardized score form by utilizing the standardization references (averages and standard deviations) configured from indicators of a ten-year period in the calculation standards.

(5) The indicators converted into standard scores are all converted to positive values by utilizing a positive conversion reference value.

(6) The indicators converted to positive values are normalized to scores between 0 and 1 by utilizing an adjusted maximum value for each indicator.

(7) The normalized indicators are converted to indicator scores by applying weights selected for the calculated indicators.

(8) A safety index is calculated by applying the indicator scores to a regional safety index equation, and a safety index reference value is applied to convert the safety index into the form of a score of 100 or lower.

(9) Finally, a safety rating from five ratings is calculated, for each of the five groups of metropolitan city, province, town, county, and district, to reflect the regional characteristics of urban and farmland regions.

As described above, a system and method for deriving a customized project for improving safety capacity using regional safety index calculation according to an embodiment of the invention can provide more objective and more reliable regional safety index and regional safety rating information by utilizing calculated indicators that include harm indicators, cause indicators, mitigation indicators, and consciousness indicators and a series of processes for standardization, conversion into positive values, and normalization in calculating the regional safety index.

Also, an embodiment of the invention can efficiently improve the safety capacity of a regional governing body by providing a visual representation of the status and causes of vulnerable fields through information on the calculated regional safety rating.

The preferred embodiment of the invention set forth above is disclosed for illustrative purposes. It should be appreciated that the skilled person having ordinary knowledge on the present invention would be able to make various modifications, alterations, and additions without departing from the spirit and scope of the invention and that such modifications, alterations, and additions fall within the scope of claims provided below.

**Claims**

1. A system for deriving a customized project for improving safety capacity using regional safety index calculation, the system comprising:

a data collection part configured to collect statistics data for calculated indicators for one or more target regions, the calculated indicators including harm indicators, cause indicators, mitigation indicators, and consciousness indicators in a traffic accident field, a fire field, a crime field, an everyday safety field, a suicide field, and an infectious disease field;

an indicator formulation part configured to modify the collected statistics data with respect to common data including population and area information for each region to indicator data allowing comparisons between different regions;

an indicator standardization part configured to remove outliers in the indicator data and convert the indicator data for each region into a standard score by utilizing standardization reference information;
an indicator positivization part configured to convert the standard score for each indicator by adding a reference value for positive conversion such that all of the standard scores become positive (+) values;
an indicator normalization part configured to normalize the positively converted indicator data to scores from 0 to 1 by utilizing an adjusted maximum value for each indicator;
a safety index calculation part configured to apply weights for each region to the normalized indicator data and calculate a safety index by using a preset regional safety index equation based on indicator scores having the weights applied; and
a signal processing part configured to process input and output signals of the data collection part, the indicator formulation part, the indicator standardization part, the indicator positivization part, the indicator normalization part, and the safety index calculation part.

2. The system for deriving a customized project for improving safety capacity using regional safety index calculation according to claim 1, wherein the indicator standardization part

adjusts outliers in the indicator data for the cause indicators, the mitigation indicators, and the consciousness indicators, with the harm indicators excluded,
configures averages and standard deviations for standardization for each indicator by utilizing the indicator data having outliers adjusted, and
adjusts scales of the indicator averages and standard deviations such that the indicator average becomes '0' and the standard deviation becomes '1' and converts the indicator data to a standardized score for each indicator by way of [Formula 1] shown below to allow comparison between indicators
the standardized score for each indicator can be obtained by [Equation 2], described above in regard to the standardization configuration by the standard configuration part, to allow comparisons between different indicators:

[Formula 1]

$$\text{Standardized Score for each Indicator} = \frac{\text{Indicator} - \text{Average}}{\text{Standard Deviation}}.$$

3. The system for deriving a customized project for improving safety capacity using regional safety index calculation according to claim 1, wherein the indicator normalization part
configures an adjusted maximum value in consideration of increase and decrease trends during a ten-year period of each indicator and increase and decrease deviations per year and per region, and normalizes the indicator data to a value from 0 to 1 by utilizing the adjusted maximum value configured for each indicator and [Formula 2] shown below:

[Formula 2]

$$\text{Normalized Indicator} = \frac{\text{Indicator}}{\text{Indicator}_{\text{adjusted maximum}}}.$$

4. The system for deriving a customized project for improving safety capacity using regional safety index calculation according to claim 1, wherein the safety index calculation part
calculates a score for each indicator by multiplying a preset weight for each indicator to a normalized score for each indicator and calculates a safety index through [Formula 3] shown below:

[Formula 3]

Safety Index $=$ 100 − (Harm Indicators + Cause Indicators − Mitig. Indicators ± Consc. Indicators)

$$= 100 - \left\{ \sum_{i=1}^{n}(\omega_i \times H_i) + \sum_{j=1}^{m}(\alpha_j \times C_j) - \sum_{k=1}^{o}(\beta_k \times M_k) \pm \sum_{l=1}^{p}(\gamma_l \times S_l) \right\}$$

| $\omega_i$: | Harm Indicator Weights | $\alpha_j$: | Cause Indicator Weights | $\beta_k$: | Mitig. Indicator Weights | $\gamma_l$: | Consc. Indcator Weights |
| --- | --- | --- | --- | --- | --- | --- | --- |
| $H_i$: | Harm Indicator Score | $C_j$: | Cause Indicator Soores | $M_k$: | Mitig. Indicator Soores | $S_l$: | Consc. Indicator Scores |

5. The system for deriving a customized project for improving safety capacity using regional safety index calculation according to claim 1, further comprising:
a safety rating part configured to calculate a regional safety rating by dividing a regional group into five ratings based on the calculated regional safety index.

6. The system for deriving a customized project for improving safety capacity using regional safety index calculation according to claim 1, further comprising:
an indicator selection part configured to establish statistics data by investigating and collecting disaster-related information from a previous five-year period and configured to determine calculated indicator and weight information by selecting indicators according to a preset indicator formulation standard, calculating weights, and incorporating expert opinion.

7. The system for deriving a customized project for improving safety capacity using regional safety index calculation according to claim 1, further comprising:
a standard configuration part for configuring standard information required for calculating the safety index by configuring standards for standardization, conversion to positive values, normalization, and safety index calculation based on statistics data of a ten-year period including observed statistics of a previous five-year period and predicted statistics of a subsequent five-year period.

8. A method for deriving a customized project for improving safety capacity using regional safety index calculation, the method comprising:

collecting statistics data for calculated indicators including harm indicators, cause indicators, mitigation indicators, and consciousness indicators for a traffic accident field, fire field, crime field, everyday safety field, suicide field, and infectious disease field for a target region;
formulating indicator data for allowing comparison between regions by converting the collected statistics data into indicator data;
standardizing the indicator data by removing outliers in the indicator data and converting the indicator data for each region into standardized scores by utilizing standardization reference information;
converting all of the indicator data in a form of standardized scores to positive values by using a reference value for positive conversion;
normalizing the positively converted indicator data to scores from 0 to 1 by utilizing an adjusted maximum value for each indicator; and
calculating a safety index by applying weights for each region to the normalized indicator data and substituting indicator scores having the weights applied thereto to a preset regional safety index equation.

9. The method for deriving a customized project for improving safety capacity using regional safety index calculation according to claim 8, wherein the formulating of indicator data comprises modifying the statistics data, with respect to common data including population and area information for each region, into the indicator data that allows comparisons between different regions.

10. The method for deriving a customized project for improving safety capacity using regional safety index calculation according to claim 8, wherein the standardizing comprises:

adjusting outliers in the indicator data for the cause indicators, the mitigation indicators, and the consciousness indicators, with the harm indicators excluded, by using quartiles;
configuring averages and standard deviations for standardization for each indicator by utilizing the indicator data having outliers adjusted; and
adjusting scales of the indicator averages and standard deviations such that the indicator average becomes '0' and the standard deviation becomes '1' and converting the indicator data to a standardized score for each indicator by way of [Formula 1] shown below to allow comparison between indicators:

[Formula 1]

$$\text{Standardized Score for each Indicator} = \frac{\text{Indicator} - \text{Average}}{\text{Standard Deviation}}$$

11. The method for deriving a customized project for improving safety capacity using regional safety index calculation according to claim 8, wherein the converting to positive values comprises:
adding a positive conversion reference value to the standardized scores for each indicator such that all of the standardized scores are positive (+) values, the positive conversion reference value configured to be greater than a minimum value and smaller than a maximum value among the standardized scores for each indicator.

12. The method for deriving a customized project for improving safety capacity using regional safety index calculation according to claim 8, wherein the normalizing comprises:
configuring an adjusted maximum value in consideration of increase and decrease trends during a ten-year period of each indicator and increase and decrease deviations per year and per region, and normalizing the indicator data to a value from 0 to 1 by utilizing the adjusted maximum value configured for each indicator and [Formula 2] shown below:

[Formula 2]

$$\text{Normalized Indicator} = \frac{\text{Indicator}}{\text{Indicator}_{\text{adjusted maximum}}}$$

13. The method for deriving a customized project for improving safety capacity using regional safety index calculation according to claim 8, wherein the calculating of the safety index comprises:
calculating a score for each indicator by multiplying a preset weight for each indicator to a normalized score for each indicator, and calculating the safety index through [Formula 3] shown below:

[Formula 3]

$$\text{Safety Index} = 100 - (\text{Harm Indicators} + \text{Cause Indicators} - \text{Mitig. Indicators} \pm \text{Consc. Indicators})$$

$$= 100 - \left\{ \sum_{i=1}^{n} (\omega_i \times H_i) + \sum_{j=1}^{m} (\alpha_j \times C_j) - \sum_{k=1}^{o} (\beta_k \times M_k) \pm \sum_{l=1}^{p} (\gamma_l \times S_l) \right\}$$

| $\omega_i$: | Harm Indicator Weights | $\alpha_j$: | Cause Indicator Weights | $\beta_k$: | Mitig. Indicator Weights | $\gamma_l$: | Consc. Indicator Weights |
|---|---|---|---|---|---|---|---|
| $H_i$: | Harm Indicator Score | $C_j$: | Cause Indicator Soores | $M_k$: | Mitig. Indicator Scores | $S_l$: | Consc. Indicator Scores |

14. The method for deriving a customized project for improving safety capacity using regional safety index calculation according to claim 8, further comprising:
calculating a regional safety rating by dividing a regional group into five ratings based on the calculated regional safety index.

15. The method for deriving a customized project for improving safety capacity using regional safety index calculation according to claim 8, wherein the calculated indicators and the weights are determined by way of establishing statistics data by investigating and collecting disaster-related information from a previous five-year period, selecting indicators according to a preset indicator formulation standard, calculating weights, and incorporating expert opinion.

16. The method for deriving a customized project for improving safety capacity using regional safety index calculation according to claim 8, wherein standards for the standardizing, the converting to positive values, the normalizing, and the calculating of the safety index are configured based on statistics data of a ten-year period including observed statistics of a previous five-year period and predicted statistics of a subsequent five-year period.

100

| Indicator Selection Part | ~ 110 |
| Standard Configuration Part | ~ 120 |
| Safety Index Part | ~ 130 |
| Safety Rating Part | ~ 140 |

FIG. 1

FIG. 2A

FIG. 2B

Calculate Regional
Safety Index

②

Establish Statistics for
Corresponding Year

Formulate Indicators

④ → Remove Outliers

⑤ → Standardize

⑥ → Convert to Positive Values

⑦ → Normalize

③ → Obtain Indicator Scores ⑪

⑧ → Obtain Safety Index

⑨ → Obtain Safety Index ⑩

FIG. 2C

# Calculate Safety Rating

Safety Rating (Unit: No.)

| | | Total | Rating1 (10%) | Rating2 (25%) | Rating3 (30%) | Rating4 (25%) | Rating5 (10%) |
|---|---|---|---|---|---|---|---|
| Region | Metropolis | 8 | 1 | 2 | 2 | 2 | 1 |
| | Province | 9 | 1 | 2 | 2 | 2 | 1 |
| Local | city | 75 | 7 | 19 | 22 | 19 | 8 |
| | County | 82 | 8 | 20 | 25 | 21 | 8 |
| | District | 69 | 7 | 17 | 21 | 17 | 7 |

FIG. 2D

EP 4 372 645 A1

# Derive Customized Project

(12)

(11) → **Customized Project** (e.gSuicides Field)

※ Customized Project List derived for each field and indicator type and updated annually

Radar charts (Traffic Accidents): Harm, Cause, Consc., Mitig.

| Type | (Suicide) Customized Project List |
|---|---|
| Harm | Watchgroup for frequent suicide sites<br>Comprehensive survey of suicide victims in past 5 years |
| Cause | Increased diagnosing and screening of depression<br>Increased job opportunities for solitary senior citizens |
| Mitig. | Training of 1 million suicide prevention volunteers |
| Consc. | Suide-prevention walkathon<br>Healthy drinking habit promotion campaign |

**Customized Project** (e.gSuicides Field)

- Support for reducing health disparities
- In-depth investigation of emergency room patients
- Suicide prevention education and awareness program
- Support for high suicide risk identification
- At-home psychiatric care service
- Psychiatric care for high trauma risk individuals

FIG. 2E

EP 4 372 645 A1

FIG. 3

EP 4 372 645 A1

FIG. 4

FIG. 5

130

Data Collection Part ⌐ 131

132

Indicator Formulation Part

Indicator Standardization Part

133

Signal Processing Part

Safety Index Calculation Part

134

Indicator Positivization Part

Indicator Normalization Part

137

136

135

FIG. 6

Select Indicators (S100)

| Establish 5 yrs' Statistics ('15-'19) | — S110 |

| Formulate Indicators | — S120 |

| Reduce Scale (In) | — S130 |

| Regression Analysis | — S140 |

| Select Final Indicators, Calculate Weights | — S150 |

Compute References and Normalize Maximum (S200)

| Normalize MAX | — S210 |

| Utilize Quartiles, Remove Outliers | — S220 |

| Apply Weights | — S230 |

| Select MAX' for each Indicator | — S240 |

Calculate Regional Safety Index (S300)

| Establish Statistics for Year | — S310 |

| Formulate Indicators (①), Normalize MAX' (②) | — S320 |

| Apply Weights | — S330 |

| Calculate Index and Compute Rating | — S340 |

FIG. 7

| (1) Collect Statisctics | (2) Formulate Indicators | (3) Remove Outliers |
|---|---|---|
| | | Remove Outliers beyond Quartile<br>$-2\partial$ $-1\partial$ 0 $1\partial$ $2\partial$ $2.69\partial$ |
| (4) Standardize | (5) Convert to Positive Values | (6) Normalize |
| ( - ) →0← ( + ) | 0← ( + ) Reference →n<br>Value | 0← →1 |
| (7) Apply Weights | (8) Apply Index Equation | (9) Compute Rating |
| | 0← →100 | 5 4 3 2 1<br>10% 25% 30% 25% 10% |

FIG. 8

27

Europäisches Patentamt

European Patent Office

Office européen des brevets

# EUROPEAN SEARCH REPORT

**Application Number**

EP 22 21 0680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 768 953 B1 (NAT DISASTER MAN INST [KR]) 22 August 2017 (2017-08-22) <br> * paragraph [0001] – paragraph [0006] * <br> * paragraph [0015] – paragraph [0019] * <br> * paragraph [0062] – paragraph [0068] * <br> * paragraph [0076] – paragraph [0078] * <br> * paragraph [0103] – paragraph [0108] * <br> * paragraph [0160] * <br> * figures 4,5A-5E * <br> ----- | 1-16 | INV. <br> G06Q10/0635 <br> G06F17/18 <br> G06Q50/26 <br> G06Q10/04 |

**TECHNICAL FIELDS SEARCHED (IPC)**

G06Q
G06F

The present search report has been drawn up for all claims

| Place of search | Date of completion of the search | Examiner |
|---|---|---|
| Munich | 22 August 2023 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 0680

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2023

| Patent document cited in search report | | Publication date | Patent family member(s) | Publication date |
|---|---|---|---|---|
| KR 101768953 | B1 | 22-08-2017 | NONE | |

EPO FORM P0459

**EP 4 372 645 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220154169

- KR 102124594